# EUROPÄISCHE PATENTSCHRIFT

(11) **EP 2 216 622 B1**
(45) Veröffentlichungstag und Bekanntmachung des Hinweises auf die Patenterteilung: **23.08.2017**
(21) Anmeldenummer: 10152607.7
(22) Anmeldetag: 04.02.2010
(51) Int. Cl.: G01B 5/255, G01B 5/00, G01M 17/06

(54) **Vermessungseinrichtung**
Measuring device
Dispositif de mesure

(30) Priorität: 06.02.2009 DE 102009007862; 06.03.2009 DE 102009012048
(43) Veröffentlichungstag der Anmeldung: 11.08.2010
(73) Patentinhaber: Balzer, Hans, 87700 Memmingen (DE)
(72) Erfinder: Balzer, Hans, 87700 Memmingen (DE)
(74) Vertreter: Popp, Eugen

(56) Entgegenhaltungen:
- EP-A1- 1 184 641
- EP-A1- 1 857 774
- DE-A1-102004 041 902
- DE-A1-102007 003 086
- US-A- 3 875 672
- US-A1- 2007 130 784

## Beschreibung

Die Erfindung betrifft eine Vermessungseinrichtung nach Anspruch 1, eine Montagegrube nach Anspruch 16 sowie ein Verfahren zum Vermessen eines Fahrzeugs nach Anspruch 18.

Vermessungseinrichtungen mit entsprechenden Radauflagen, insbesondere Drehtellern für die Vermessung der Achse, der Spur, des Radsturzes und/oder des Nachlaufes eines Fahrzeuges sind an sich bekannt.

Beispielsweise zeigt die DE 32 10 316 A1 eine Winkel- und Spurmessvorrichtung für Kraftfahrzeuge, die aus einem das Rad aufnehmenden Drehteller mit dazu orientierten höheneinstellbaren Messstab sowie am Fahrzeug zentrierbaren Bogenskalen, welche mit Hilfe des Messstabes feinablesbar sind, besteht. Die Winkel- und Spurmessvorrichtung nach diesem Stand der Technik ist entweder an Richtbänken, Hebebühnen und Arbeitsgruben ortsfest montierbar oder als transportables Gerät ausbildbar. Der Begriff "transportabel" bedeutet in diesem Zusammenhang, dass die Winkel- und Spurmessvorrichtung auf relativ einfache Weise verstaubar ist, so dass diese relativ einfach an verschiedene Werkstätten, die nur gelegentlich Vermessungsarbeiten durchführen, auch zentral verliehen werden kann.

Aus der DE 10 2004 041 902 A1 ist eine Montagegrube mit einer rolladenartigen Abdeckung bekannt.

Die EP 1 857 774 A1 offenbart ein Verfahren und eine Vorrichtung zur Radschlag-Kompensation bei der Achsvermessung eines Kraftfahrzeuges unter Drehung des zu vermessenden Rades durch Abrollen auf einer unter dem Rad verfahrbaren Schiebeplatte. Die DE 10 2007 003 086 A1 offenbart eine Vorrichtung zum Messen der Fahrwerksgeometrie mit translatorisch verstellbaren Drehtellern. US 3 875 672, EP 1 184 641 und US 2007/0130784 offenbaren Vermessungseinrichtungen zum Messen von Fahrzeugen. In diesem Zusammenhang wird es als unbefriedigend empfunden, dass die bekannten Vermessungseinrichtungen zu einem vergleichsweise großen Zeitaufwand bei der Vermessung von Fahrzeugen, insbesondere Lastkraftwagen, führen.

Der Erfindung liegt die Aufgabe zu Grunde, eine Vermessungseinrichtung der oben genannten Art dahingehend weiter zu bilden, dass die Vermessung mit geringerem Zeitaufwand erfolgen kann. Diese Aufgabe wird durch eine Vermessungseinrichtung nach Patentanspruch 1, eine Montagegrube nach Patentanspruch 16 sowie ein Verfahren zum Vermessen eines Fahrzeuges, insbesondere Lastkraftwagens nach Patentanspruch 18 gelöst.

Die Aufgabe wird insbesondere durch eine Vermessungseinrichtung mit mindestens zwei ersten Drehtellereinrichtungen, für die Vermessung beispielsweise der Achse, der Spur, des Radsturzes und/oder des Nachlaufes eines Fahrzeuges, insbesondere eines Lastkraftwagens gelöst, wobei die mindestens zwei ersten Drehtellereinrichtungen innerhalb der Vermessungseinrichtung in Fahrzeuglängsrichtung verfahrbar sind. Die Vermessungseinrichtung kann ortsfest installiert oder transportabel sein.

Ein wesentlicher Punkt der Erfindung liegt darin, dass es ermöglicht wird, die Drehtellereinrichtungen innerhalb der Vermessungseinrichtung in Fahrzeuglängsrichtung zu verfahren. Dadurch kann die Vermessungseinrichtung flexibel an Lastkraftwagen mit verschiedenen Radständen angepasst werden. Dadurch entfällt die Notwendigkeit einer aufwändigen Rangierung, insbesondere bei mehrachsigen Fahrzeugen. Insgesamt kann der Zeitaufwand für die Vermessung erheblich, nämlich um etwa 8 - 10 Minuten pro zu vermessendes Fahrzeug (im Schnitt) reduziert werden. Letzlich hängt die Zeitersparnis natürlich auch vom konkreten zu vermessenden Fahrzeug ab.

Der Begriff "Fahrzeuglängsrichtung" (auch X-Richtung) soll in diesem Zusammenhang als Richtung verstanden werden, die durch die Fahrtrichtung des Fahrzeuges bei Geradeausfahrt definiert ist. Die "Fahrzeugquerrichtung" (auch Y-Richtung) soll als senkrecht auf die "Fahrzeuglängsrichtung" stehend verstanden werden. Übertragen auf die Vermessungs- und Drehtellereinrichtung und deren Elemente beziehen sich die Begriffe "Fahrzeuglängsrichtung" und "Fahrzeugquerrichtung" auf die Art und Weise, wie die jeweiligen Einrichtungen und deren Elemente vom zu vermessenden Fahrzeug angefahren werden.

Vorzugsweise weist die Vermessungseinrichtung mindestens eine, insbesondere zwei zweite Drehtellereinrichtung/Drehtellereinrichtungen auf, die bezüglich der Fahrzeuglängsrichtung ortsfest installiert sind. Im Zusammenspiel mit den ersten Drehtellereinrichtungen/der ersten Drehtellereinrichtung kann die Vermessungseinrichtung flexibel an verschiedene Radstände angepaßt werden. Beispielsweise bei einem zweiachsigen Fahrzeug kann dann die Vorderachse über zwei bezüglich der Fahrzeuglängsrichtung ortsfest installierten zweiten Drehtellereinrichtungen platziert werden, wobei die Hinterachse auf zwei beispielsweise im Vorfeld bereits entsprechend verfahrene erste Drehtellereinrichtungen platziert wird (oder umgekehrt). Alternativ ist es auch denkbar, ausschließlich verfahrbare Drehtellereinrichtungen vorzusehen und auf bezüglich der Fahrzeuglängsrichtung ortsfeste Drehtellereinrichtungen zu verzichten. Im Zusammenspiel mit den ersten Drehtellereinrichtungen/der ersten Drehtellereinrichtung kann die Vermessungseinrichtung flexibel an verschiedene Radstände angepaßt werden.

In bevorzugten Ausführungsformen ist mindestens eine erste und/oder zweite Drehtellereinrichtung in Fahrzeugquerrichtung verfahrbar. Dadurch kann die Vermessungseinrichtung auch besonders einfach an verschiedene Spurweiten der zu vermessenden Fahrzeuge angepasst werden. Insbesondere wenn die ersten Drehtellereinrichtungen in Fahrzeugquerrichtung verfahrbar sind, sind diese praktisch beliebig (innerhalb der durch die Konstruktion bedingten Grenzen) in einer X/Y-Ebene verfahrbar und damit besonders flexibel. Alternativ können die erste und/oder zweite Drehtellereinrichtung jedoch - im Sinne einer konstruktiv besonders einfachen Ausführungsform - in Bezug auf die Fahrzeugquerrichtung ortsfest installiert sein.

Mindestens zwei der ersten Drehtellereinrichtungen sind miteinander verbunden. Durch diese Maßnahme können die Drehtellereinrichtungen derart miteinander gekoppelt werden, dass ein Verfahren einer der ersten Drehtellereinrichtungen zu einem Verfahren einer weiteren ersten Drehtellereinrichtung führt.

In einer Weiterbildung sind mindestens zwei der ersten Drehtellereinrichtungen bezüglich der Fahrzeugslängsrichtung zueinander versetzt, insbesondere hintereinander angeordnet/anordenbar. Dies ist besonders bei Fahrzeugen, die mehr als zwei Achsen aufweisen, vorteilhaft. Im Prinzip, insbesondere bei nur zweiachsigen Fahrzeugen, können die ersten Drehtellereinrichtungen jedoch auch zwingend auf gleiche Höhe bezüglich der Fahrzeuglängsrichtung angeordnet sein, beispielsweise mittels einer starren Verbindung.

Vorzugsweise weist die Vermessungseinrichtung eine Antriebseinheit auf, die zum Verfahren von mindestens zwei der ersten Drehtellereinrichtungen ausgebildet ist. Dadurch wird einerseits der konstruktive Aufwand der Vermessungseinrichtung reduziert und andererseits wird es ermöglicht, zwei (oder auch mehr) der ersten Drehtellereinrichtungen parallel bzw. synchron zu verfahren. Selbstverständlich ist es auch denkbar, für jede oder einzelne der ersten Drehtellereinrichtungen eigene Antriebseinheiten zum Verfahren in Fahrzeuglängsrichtung vorzusehen. Weiterhin können auch Antriebseinheiten vorgesehen sein, die die ersten und/oder zweiten Drehtellereinrichtungen in Fahrzeugquerrichtung verfahren. Denkbar ist es prinzipiell auch, dass dieselbe Antriebseinheit eine oder auch mehrerer erste Drehtellereinrichtungen sowohl in Fahrzeuglängsrichtung als auch in Fahrzeugquerrichtung verfahren kann.

In einer bevorzugten Ausführungsform ist mindestens eine Aufnahmekassette vorgesehen, innerhalb der mindestens eine erste Drehtellereinrichtung aufgenommen und verfahrbar ist. Dadurch kann eine der ersten Drehtellereinrichtungen insbesondere bei einer in einer Bodenausnehmung eingefügten Aufnahmekassette besonders einfach und platzsparend verstaut werden.

Vorzugsweise umfasst die Vermessungseinrichtung mindestens ein Tragbalkenband, durch welches die Aufnahmekassette oberseitig mindestens bereichsweise, beispielsweise zu mindestens 20 % oder 50 % oder 70 %, abdeckbar/abgedeckt ist. Durch das Tragbalkenband kann dann verhindert werden, dass Personen in die Aufnahmekassette hineinfallen und zu Schaden kommen. Außerdem wird das Hineinfallen von Schmutz in die Aufnahmekassette reduziert oder gänzlich verhindert. Ist die Aufnahmekassette nicht vollständig abdeckt, so ist es möglich, relativ einfach bei anfallenden Wartungs- oder Reparaturarbeiten in die Aufnahmekassette zu gelangen. Anstelle eines Tragbalkenbandes kann ein anderes Abdeckungsmittel zum Einsatz kommen. Die Tragbalken des Tragbalkenbandes können vorzugsweise als Leichtmetall-Hohlprofile ausgebildet sein. Die Tragbalken sowie das Tragbalkenband können insbesondere wie in der Deutschen Patentanmeldung DE 10 2004 04 19 02 A1 ausgebildet sein. Vorzugsweise weisen die Tragbalken zumindest unterseitig jeweils einen trapezförmigen Querschnitt auf, so dass eine Gelenkverbindung zwischen benachbarten Tragbalken im Bereich zwischen Ober- und Unterseite der Tragbalken, insbesondere auf etwa halber Höhe derselben möglich ist. Auf diese Art und Weise lassen sich im Vergleich zum Stand der Technik kleine Umlenkradien erzielen mit der Folge, dass Platz eingespart werden kann. Des weiteren wird dadurch, dass die Gelenkverbindung zwischen benachbarten Tragbalken von der Unterseite nach oben zur Oberseite hin verlegt ist, erreicht, dass beim Schiebebetrieb nicht mehr die Gefahr besteht, dass die Tragbalken sich gegenseitig "aufstellen". Die Gelenkverbindung befindet sich vielmehr im Bereich der sogenannten "neutralen Zone". Die Tragbalken können als Längsprofile, insbesondere Stranggußprofile aus Aluminium od. dgl. Leichtmetall ausgebildet sein. Insbesondere Aluminium hat sich als Material für die Tragbalken bewährt. Die entsprechenden Tragbalken können extrem leicht gebaut werden mit der Folge, dass auch entsprechend kleiner dimensionierte Antriebe erforderlich sind bei gleicher oder sogar größerer Länge der Abdeckung. Die Tragbalken können oberseitig an einer ihrer Längsseiten einen stufenartigen Rücksprung aufweisen, wobei die gegenüberliegende Längsseite einen leisten- bzw. stufenartigen Vorsprung umfassen kann, wobei Rück- und Vorsprung komplementär zueinander ausgebildet sein können, so daß in ebener Abdeckstellung der Tragbalken der Vorsprung des einen Tragbalkens in den Rücksprung des benachbarten Tragbalkens unter Ausbildung einer nahezu geschlossenen Sicht- und Gehfläche einpassbar ist. Auf diese Art und Weise wird eine auch für Schmutzpartikel oder herabfallende Werkzeuge, wie Schrauben od. dgl., geschlossene Abdeckung erreicht. Das Tragbalkenband kann auch derart ausgebildet sein, dass durch dieses die Drehtellereinrichtungen abgedeckt sind oder abdeckbar sind.

In einer konkreten Ausführungsform ist die Aufnahmekassette durch das Tragbalkenband und mindestens eine zugeordnete erste Drehtellereinrichtung vollständig abdeckbar/abgedeckt. Bei dieser Ausführungsform ist es ausgeschlossen, dass Personen in die Aufnahmekassette stürzen und zu Schaden kommen. Bei anfallenden Wartungs- oder Reparaturarbeiten können bei dieser Ausführungsform entsprechende Öffnungsvorrichtungen, beispielsweise in oder an der Drehtellereinrichtung oder innerhalb der Aufnahmekassette vorgesehen sein oder das Tragbalkenband mit verschließbaren Öffnungen wie Klappen oder Schiebevorrichtungen versehen sein. Anstelle eines Tragbalkenbandes kann ein anderes Abdeckungsmittel zum Einsatz kommen.

Vorzugsweise ist dieselbe Antriebseinheit zum Verfahren der mindestens einen Drehtellereinrichtung sowie des Tragbalkenbandes vorgesehen. Beispielsweise kann die Drehtellereinrichtung direkt über den Antrieb angetrieben sein und das Tragbalkenband indirekt über die Drehtellereinrichtung. Alternativ kann auch das Tragbalkenband direkt angetrieben sein und die Drehtellereinrichtung indirekt über das Tragbalkenband. Weiter alternativ ist es auch möglich, Drehtellereinrichtung und Tragbalkenband über separate Kupplungsvorrichtungen durch denselben Antrieb anzutreiben. Dadurch, dass der Antrieb sowohl zum Antrieb mindestens einer ersten Drehtellereinrichtung als auch des Tragbalkenbandes vorgesehen ist, wird in jedem Fall der Platzbedarf der Vermessungseinrichtung reduziert und eine synchrone Abstimmung der Bewegung von Drehtellereinrichtung und Tragbalkenband erleichtert.

In einer bevorzugten Ausführungsform der Vermessungseinrichtung ist ein erstes Ende des Tragbalkenbandes mit einem ersten Ende von mindestens einer ersten Drehtellereinrichtung verbindbar/verbunden, wobei das Tragbalkenband über Umlenkvorrichtungen derart umgelenkt/umlenkbar ist, dass ein zweites Ende des Tragbalkenbandes mit einem zweiten Ende der mindestens einen Drehtellereinrichtung verbindbar/verbunden ist, so dass ein lediglich durch die erste Drehtellereinrichtung und ggf. durch mindestens ein Verbindungselement, wie beispielsweise durch eine Spannvorrichtung unterbrochenes, ansonsten umlaufendes Tragbalkenband ausgebildet/ausbildbar ist. Diese Ausführungsform ermöglicht es auf besonders einfache Weise und unabhängig von der Position der ersten Drehtellereinrichtung, dass die Aufnahmekassette stets oberseitig abgeschlossen ist. Ein irgendwie geartetes Ein- oder Ausfahren des Tragbalkenbandes in eine Aufnahmevorrichtung ist aufgrund der Rückführung nicht erforderlich, so dass auch entsprechende Aufnahmevorrichtungen nicht erforderlich sind, was weiter Platz spart. Denkbar ist es natürlich alternativ auch, das Tragbalkenband an beiden Enden oder zumindest einem Ende in entsprechende Aufnahmevorrichtungen ein- und auszufahren.

Vorzugsweise beträgt ein maximaler Fahrweg von mindestens einer ersten Drehtellereinrichtung mindestens 4 Meter, insbesondere 7 Meter, vorzugsweise 9 Meter und besonders vorzugsweise 11 Meter. Dies erhöht weiter die Flexibilität der Vermessungseinrichtung.

Vorzugsweise ist das Tragbalkenband befahrbar. Insbesondere kann das Tragbalkenband derart ausgebildet sein, dass es einen LKW vorzugsweise mit einem Gewicht von 7 Tonnen, weiter vorzugsweise 12 Tonnen und insbesondere mindestens 18 Tonnen trägt.

In einer bevorzugten Weiterbildung sind ein Fahrgestell von mindestens einer ersten Drehtellereinrichtung und/oder das Tragbalkenband auf/in vorzugsweise separaten Führungseinrichtungen insbesondere verfahrbar gelagert/aufgenommen. Dadurch kann die Stärke bzw. Maximalbelastung der jeweiligen Führungseinrichtungen adäquat an die verschiedenen Auflasten des Tragbalkenbandes bzw. der Drehtellereinrichtung angepasst werden. Alternativ ist es auch vorstellbar, dass das Fahrgestell der mindestens einen Drehtellereinrichtung und das Tragbalkenband in derselben Führungsschiene laufen.

Vorzugsweise ist innerhalb der Aufnahmekassette ein Kabelschleppkanal insbesondere für Druckluft- und/oder Elektrozuführungen, gegebenenfalls auch für weitere Versorgungsleitungen ausgebildet. Bei dieser Ausführungsform ist eine reibungslose Versorgung auch bei einem Verfahren der Drehtellereinrichtung gewährleistet.

Besonders bevorzugt ist eine Ausführungsform der Vermessungseinrichtung, die ein Lesegerät umfasst, über das Fahrzeugkenndaten auslesbar sind. Dadurch wird der Aufwand zu einer Voreinstellung der Vermessungseinrichtung erheblich reduziert, insbesondere wenn man berücksichtigt, dass viele Fahrzeuge, insbesondere Neufahrzeuge, üblicherweise ihre Kenndaten einschließlich Achsabstand auf einer entsprechenden Kenndatenkarte abgespeichert haben. In diesem Zusammenhang soll der Begriff "Lesegerät" dahin gehend verstanden werden, dass jede Vorrichtung gemeint sein kann, über die entsprechende Daten ausgelesen oder in anderer Form weiter verarbeitet werden können. Beispielsweise kann es sich bei einem derartigen Lesegerät auch um einen PC handeln, der die Daten über eine vorzugsweise über das Internet oder ein Intranet zur Verfügung gestelltes Archiv ausliest. In Frage kommen als Lesegerät auch übliche Scannervorrichtungen, die beispielsweise Daten von Magnet- und/oder Chipkarten auslesen können.

Beispielhaft, nicht erfindungsgemäß wird eine Drehtellereinrichtung für die Vermessung beispielsweise der Achse, der Spur, des Radsturzes und/oder des Nachlaufes eines Fahrzeuges, insbesondere eines Lastkraftwagens, vorgeschlagen, wobei die Drehtellereinrichtung in Fahrzeuglängsrichtung verfahrbar ist. Eine derartige Drehtellereinrichtung hat im Prinzip dieselben Vorteile wie die Vermessungseinrichtung.

In einem weiteren unabhängigen Aspekt wird die oben genannte Aufgabe auch durch eine Montagegrube gelöst, die die vorbeschriebene Vermessungseinrichtung Drehtellereinrichtung aufweist. Insbesondere können die Drehtellereinrichtungen an einem Rand der Montagegrube angeordnet sein. Alternativ können diese auch zumindest bereichsweise oberhalb der Montagegrube angeordnet sein. Vorzugsweise ist die Montagegrube oberseitig mindestens bereichsweise, insbesondere vollständig von dem Tragbalkenband und/oder mindestens einer ersten Drehtellereinrichtung und/oder mindestens einer zweiten Drehtellereinrichtung abdeckbar bzw. abgedeckt. Durch eine Integration von mindestens einer Drehtellereinrichtung in die Montagegrube können auf besonders einfache Weise Vermessungen durchgeführt werden. In der Montagegrube können zugleich Reparatur- und Montagearbeiten am zu vermessenden Fahrzeug durchgeführt werden. Insbesondere können Montagegrube einschließlich Vermessungseinrichtung und/oder Drehtellereinrichtungen als vorgefertigte Einheit hergestellt sein bzw. herstellbar sein. Der Montageaufwand bei der Errichtung der Montagegrube vor Ort ist dann deutlich reduziert.

Weiterhin wird die oben genannte Aufgabe auch durch ein Verfahren zum Vermessen eines Fahrzeuges, insbesondere eines Lastkraftwagens, gelöst, wobei das Verfahren die Schritte umfasst:
a) Auslesen von Fahrzeugkenndaten, insbesondere Auslesen des Radstandes und/oder der Spurweite,
b) Synchrones Verfahren von mindestens zwei Drehtellereinrichtungen einer Vermessungseinrichtung durch einen gemeinsamen Antrieb entsprechend den ausgelesenen Fahrzeugkenndaten,
c) Positionieren mindestens eines Rades des zu vermessenden Fahrzeuges auf den entsprechenden Drehtellereinrichtungen und
d) Durchführen von Messungen, insbesondere Vermessung der Achse, der Spur, des Radsturzes und/oder des Nachlaufs des zu vermessenden Fahrzeugs.

Im Schritt a) kann ein Scanner oder PC zum Einsatz kommen. Der PC kann dann beispielsweise mit einem Netzwerk verbunden sein oder die entsprechenden Fahrzeugkenndaten über einen USB-Anschluss, ein CD-Laufwerk oder dergleichen auslesen. Entsprechend können die Fahrzeugkenndaten auf Speicherkarten wie Magnet- oder Chipkarten oder USB-Sticks oder weiteren elektronischen Speichermitteln zur Verfügung gestellt werden. Selbstverständlich kann das Auslesen der Fahrzeugkenndaten auch manuell erfolgen. Im Schritt b) kann das Verfahren der Drehtellereinrichtung entsprechend der ausgelesenen Fahrzeugkenndaten vorzugsweise automatisch oder alternativ manuell erfolgen. Das Verfahren zum Vermessen eines Fahrzeuges hat dieselben Vorteile wie die Vermessungseinrichtung.

Weitere Ausführungsformen ergeben sich aus den Unteransprüchen. erfolgen. Das Verfahren zum Vermessen eines Fahrzeuges hat dieselben Vorteile wie die Vermessungseinrichtung.

Weitere Ausführungsformen ergeben sich aus den Unteransprüchen.

Nachfolgend wird die Erfindung auch hinsichtlich weiterer Merkmale und Vorteile anhand von Ausführungsbeispielen beschrieben, die anhand der Abbildungen näher erläutert werden. Hierbei zeigen:
- Fig. 1: Eine erfindungsgemäße Vermessungseinrichtung in Schrägansicht;
- Fig. 2: die Vermessungseinrichtung gemäß Fig. 1 in einem Schnitt entlang der Linie II-II in Fig. 3;
- Fig. 3: Ansicht der Vermessungseinrichtung gemäß Fig. 1 von oben (teilweise);
- Fig. 4: Ausschnitt eines fußseitigen Endes der Schnittansicht gemäß Fig. 3;
- Fig. 5: Ausschnitt eines kopfseitigen Endes der Schnittansicht gemäß Fig. 3;
- Fig. 6: Schnitt entlang der Linie VI-VI in Fig. 4;
- Fig. 7: eine alternative Ausführungsform der Vermessungseinrichtung; und
- Fig. 8: eine erfindungsgemäße Montagegrube in einer schematischen Schrägansicht.

In der nachfolgenden Beschreibung werden für gleiche und gleich wirkende Teile dieselben Bezugsziffern verwendet.

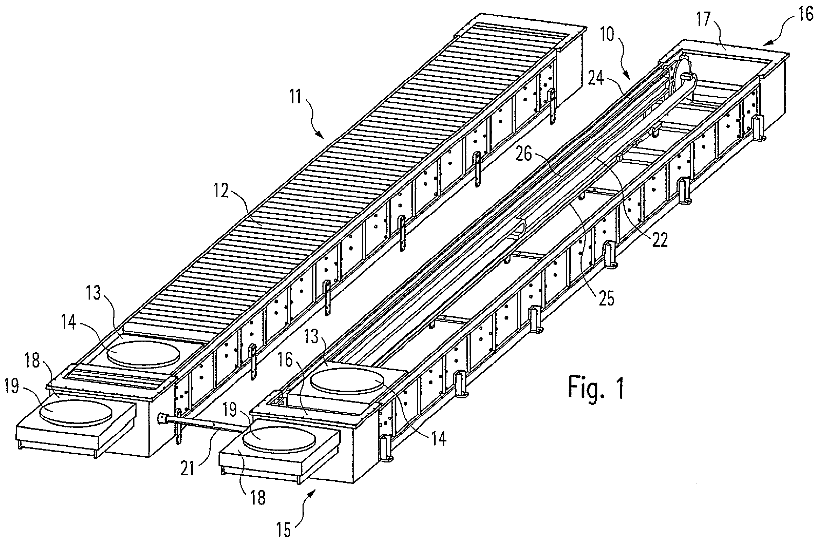

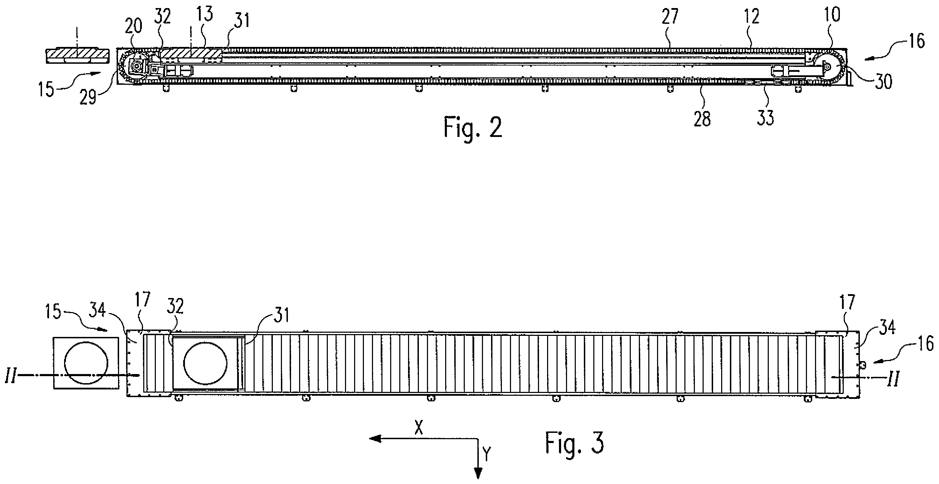

Fig. 1 zeigt eine Schrägansicht einer erfindungsgemäßen Vermessungseinrichtung. Die Vermessungseinrichtung umfasst zwei Aufnahmekassetten 10, 11, in denen je ein Tragbalkenband 12 und eine Drehtellereinrichtung 13 mit je einem Drehteller 14 in Fahrzeuglängsrichtung X (wegen Richtungsangabe siehe Fig. 3; die Fahrzeugquerrichtung ist mit Y gekennzeichnet) verfahrbar aufgenommen sind. Das der ersten Aufnahmekassette 10 zugeordnete Tragbalkenband ist in Fig. 1 nicht gezeichnet, um das Innere der Aufnahmekassette 10 einsehbar zu machen. An einem fußseitigen Ende 15 und einem kopfseitigen Ende 16 ist oberseitig und an das Tragbalkenband 12 anschließend ein Anti-Rutsch-Belag 17 vorgesehen. Am fußseitigen Ende der Aufnahmekassetten 10, 11 ist je eine ortsfest installierte Drehtellereinrichtung 18 mit oberseitig angeordnetem Drehteller 19 angeordnet.

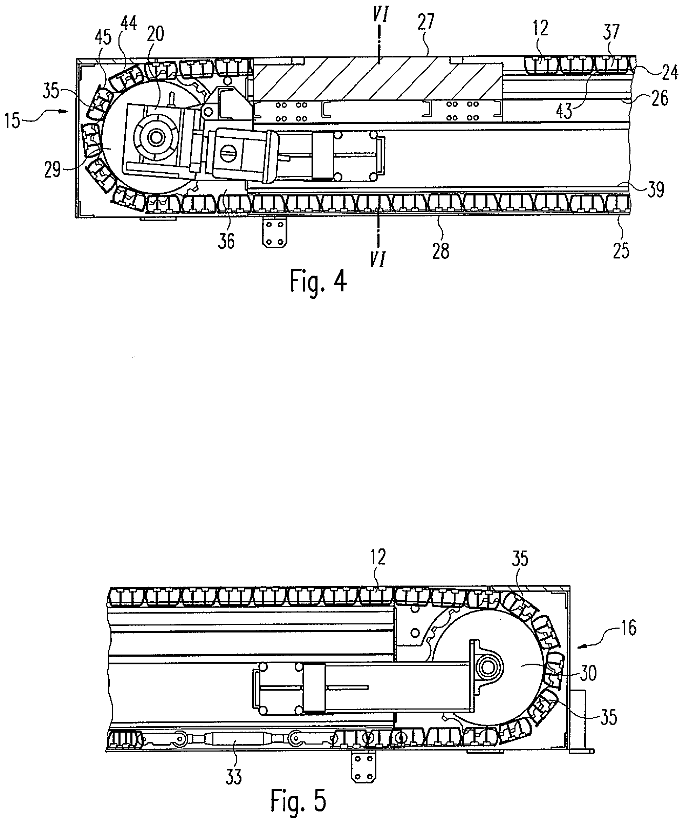

Innerhalb der Aufnahmekassetten 10, 11 sind am kopfseitigen Ende 16 Antriebseinheiten 20 untergebracht (siehe Figuren 2 und 4). Die ortsfest installierten Drehtellereinrichtungen 18 sind außerhalb der Aufnahmekassetten 10, 11 angebracht. Alternativ ist es denkbar die jeweilige ortsfest installierte Drehtellereinrichtung 18 innerhalb der entsprechenden Aufnahmekassette 10, 11 vorzusehen. Die in Fig. 1 nicht zu sehenden Antriebseinheiten 20 stehen über ein Verbindungselement, konkret eine Verbindungsstange 21 (die wiederum in Fig. 1 zu sehen ist), in Wirkverbindung.

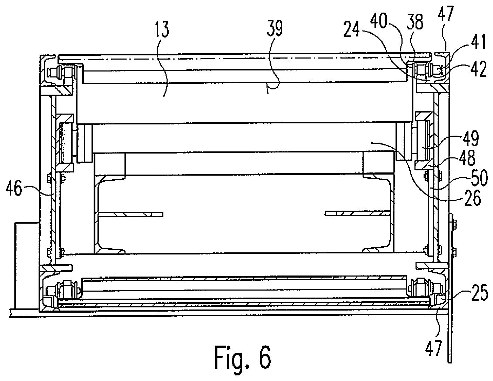

An Seiteninnenwänden 22 sind ein Kabelschleppkanal 23, eine obere Tragbalkenbandführungsschienen 24, eine untere Tragbalkenführungsschiene 25 und eine Drehtellereinrichtungsschiene 26 (vgl. auch Fig. 6) angeordnet. Wie Fig. 4 entnommen werden kann, ist in einem oberen Bereich 27 der Aufnahmekassette 10 die obere Tragbalkenführungsschiene 24, sowie in einem unteren Bereich 28 die untere Tragbalkenführungsschiene 25 angeordnet. Der Begriff "Schiene" soll in diesem Zusammenhang nicht zwangsläufig als Erhebung verstanden werden, sondern allgemein als Auflagefläche bzw. Aufnahmeelement für entsprechende Gleit- und/oder Rollelemente. Gegebenenfalls kann es sich bei der "Schiene" auch um Erhebungen handeln.

Die Drehteller 14 und 19 sind in den entsprechenden Drehtellereinrichtungen 13 und 18 drehbar gelagert.

Fig. 2 zeigt eine Schnittansicht der Vermessungseinrichtung entlang der Linie II-II in Fig. 3. Wie Fig. 2 entnommen werden kann, kann das Tragbalkenband 12 über eine fußseitige Umlenkvorrichtung 29 und eine kopfseitige Umlenkvorrichtung 30 derartig zurückgeführt werden, dass ein erstes Ende 31 des Tragbalkenbandes und ein zweites Ende 32 des Tragbalkenbandes in Verbindung mit entsprechenden Enden der Drehtellereinrichtung 13 sind. Zur Längeneinstellung (im Vorfeld oder während des Betriebs) des Tragbalkenbandes 12 ist eine Spannvorrichtung in Form eines Spannschlosses 33 innerhalb des Tragbalkenbandes 12 vorgesehen (vgl. auch Fig. 5).

Im Bereich der fußseitigen Umlenkvorrichtung 29 und/oder der kopfseitigen Umlenkvorrichtung 30 können Reinigungsvorrichtungen mit Bürsten od. dgl. vorgesehen sein (nicht in den Figuren gezeigt), so dass Schmutzpartikel oder herabfallende Werkzeuge, beispielsweise Schrauben, entfernt werden können. Dies ist besonders vorteilhaft, wenn das Tragbalkenband im wesentlichen dicht gegenüber Schmutzkörpern od. dgl. ausgebildet ist.

In Fig. 3 ist eine mit dem Anti-Rutsch-Belag 17 beschichtete Umlenkabdeckung 34 (sowohl am kopfseitigen Ende 16 als auch am fußseitigen Ende 15) angeordnet. Die Umlenkabdeckungen 34 sind, ebenso wie das Tragbalkenband 12 überfahr in dem Sinne, dass Umlenkabdeckung 34 und Tragbalkenband 12 einer gewissen Auflast von besipielsweise mindestens 6 Tonnen, insbesondere 8 Tonnen, vorzugsweise 12 Tonnen und besonders vorzugsweise 20 Tonnen standhalten. Die Umlenkabdeckungn 34 sind vorzugsweise lösbar am fußseitigen Ende 15 bzw. kopfseitigen Ende 16 angebracht, können aber auch fest installiert sein.

Fig. 4 zeigt einen Ausschnitt des fußseitigen Endes 15. Fig. 5 zeigt einen Ausschnitt des kopfseitigen Endes 16 der Vermessungseinrichtung. Die fußseitige Umlenkvorrichtung 29 und die kopfseitige Umlenkvorrichtung 30 weisen je zwei Zahnräder 35 auf (in Figuren Fig. 4 und 5 ist jeweils nur ein Zahnrad zu sehen).

Die Zahnräder 35 dienen der Umlenkung des Tragbalkenbandes 12. Das Zahnrad 30 am fußseitigen Ende 15 überträgt außerdem die Energie der Antriebseinheit 20 auf das Tragbalkenband 12 (siehe Fig. 4).

Die Antriebseinheit 20 umfasst Stahlblechformteile, die zu einer kompakten Einheit verbunden sind. Seitlich angebrachte Anschlagprofile (nicht in den Figuren gezeigt) ermöglichen ein genaues Justieren der Antriebseinheit 20 in einem Aufnahmeteil 36.

Das Tragbalkenband 12 umfasst mehrere Tragbalken 37 (siehe Fig. 4) und ist in der zugeordneten Tragbalkenbandführungsschiene 24 (vgl. Fig. 6) verschiebbar gehalten.

An beiden Stirnseiten eines jeden Tragbalkens 37 sind rechteckförmige Ausnehmungen 38 ausgebildet, so dass der jeweilige Tragbalken 37 insgesamt eine T-förmige Struktur (vgl. Fig. 6) aufweist.

Durch die Aneinanderreihung der einzelnen rechteckförmigen Ausnehmungen 38 in nebeneinander angeordneten Tragbalken 37 sind in den Seitenbereichen des Tragbalkenbandes 12 in Längsrichtung verlaufende Nuten definiert.

In diesen Nuten verlaufen - an einer Innenseite 39 des Tragbalkenbandes 12 - zwei, sich in Längsrichtung der Aufnahmekassette 10 erstreckende Buchsenförderketten (in Figuren 4 bis 6 nur angedeutet). Jedem Tragbalken 37 ist jeweils ein Kettenglied einer an den beiden Stirnbereichen verlaufenden Buchsenförderketten zugeordnet. Zwischen jeweils zwei nachfolgenden Kettengliedern der Buchsenförderkette ist ein Gelenk vorgesehen, das jeweils einer Spalte zwischen den Tragbalken 37 zugeordnet ist.

Die einzelnen Kettenglieder der Buchsenförderkette 40 sind mittels Bolzen 41 (siehe Fig. 6) miteinander verbunden. Auf diesen Bolzen 41 sind Führungsrollen 42 gelagert, die auf den jeweiligen Tragbalkenführungsschienen 24 abrollen.

Die Buchsenförderkette ist am fußseitigen Ende 15 und am kopfseitigen Ende 16 je eines Zahnrades 35 zugeordnet. Auf die Bolzen 41 der Kettenglieder kommen sukzessive entsprechende Ausnehmungen der Zahnräder 35 zu liegen und werden bei Betätigen der Zahnräder 35 bewegt. Auf diese Weise kann das Tragbalkenband 12 und damit auch die Drehtellereinrichtung 13 je nach Betätigung in eine gewünschte Richtung verschoben werden. Die Tragbalken 37 weisen an ihren innenseitigen vorderen und hinteren (in Bezug auf die Verschieberichtung) liegenden Kanten Abschrägungen 43 auf, die eine Umlenkung mit relativ geringem Radius ermöglichen. Dadurch, dass die Tragbalken also zumindest unterseitig jeweils einen trapezförmigen Querschnitt aufweisen, ist eine Gelenkverbindung zwischen benacharten Tragbalken im Bereich zwischen Ober- und Unterseite der Tragbalken 12 möglich. Außerdem weisen die einzelnen Tragbalken Nuten 44 und Federn 45 auf (siehe Fig. 5 im Bereich des Zahnrades 35), die ein Eindringen von Schmutz bzw. Fremdkörpern erschweren und praktisch unmöglich machen.

Fig. 6 kann im Einzelnen eine Tragwerkskonstruktion für die Aufnahme der Drehtellereinrichtung 13 und des Tragbalkenbandes 12 entnommen werden. Die Tragwerkskonstruktion umfasst zwei Doppel-T-Träger 46 in stabiler Schweißkonstruktion. Ober- und unterhalb der jeweiligen Trägergurte der Doppel-T-Träger 46 sind U-Profile 47 zur Führung des Tragbalkenbandes 12 vorgesehen. Im Bereich des Steges der Doppel-T-Träger 46 sind nach innen geöffnete U-Profile 48 für Führungsrollen 49 eines Fahrgestells 50 der Drehtellereinrichtung 13 vorgesehen.

Das Fahrgestell 50 kann aus einer stabilen Stahlkonstruktion in Verbundbauweise bestehen. Die Führungsrollen 49 können horizontale und vertikale Verstelleinheiten (nicht in Figuren gezeigt) aufweisen. Die Führungsrollen 49 können lösbar montiert sein, wobei ein Feinjustieren in Verbindung mit den entsprechenden Drehtellereinrichtungsführungsschienen 26 im Millimeterbereich ermöglicht sein kann.

Auch die ortsfest installierten Drehtellereinrichtungen 18 (siehe Fig. 1) können aus einer stabilen Stahlkonstruktion in Verbundbauweise bestehen. Die ortsfest installierten Drehtellereinrichtungen 18 können seitlich mit den Doppel-T-Trägern 46 verbunden sein.

Die Antriebseinheit 20 umfasst vorzugsweise einen Elektromotor und ein Untersetzungsgetriebe mit Klemmleiste, Antriebswellen und Antriebsrädern sowie ein Stehlager mit Pendelkugellager.

Mindestens eine der Umlenkabdeckungen 34 kann aus Stahlblech bestehen und mit zugeordneten seitlichen Auflagen fest montiert sein.

Wie die Umlenkabdeckungen 34, können auch die Tragbalken 37 bzw. das Tragbalkenband 12 mit einem Anti-Rutsch-Belag ausgestattet sein (insbesondere an der Oberseite).

Die Tragbalken 37 sind vorzugsweise als Mehrkammer-Leichtmetall-Hohlprofile ausgebildet.

Vorzugsweise werden die verfahrbaren Drehtellereinrichtungen 13 durch ein jeweils zugeordnetes Tragbalkenband 12 befördert, können dabei jedoch vollständig autark in einer eigenen Führungsschiene (wie beispielsweise den Drehtellereinrichtungsführungsschienen 26) laufen.

Alternativ ist es auch möglich, für die Drehtellereinrichtung 13 und das Tragbalkenband 12 separate Antriebseinheiten vorzusehen oder die Drehtellereinrichtung 13 direkt über eine entsprechende Antriebseinheit anzutreiben und das Tragbalkenband 12 indirekt über die Drehtellereinrichtung 13.

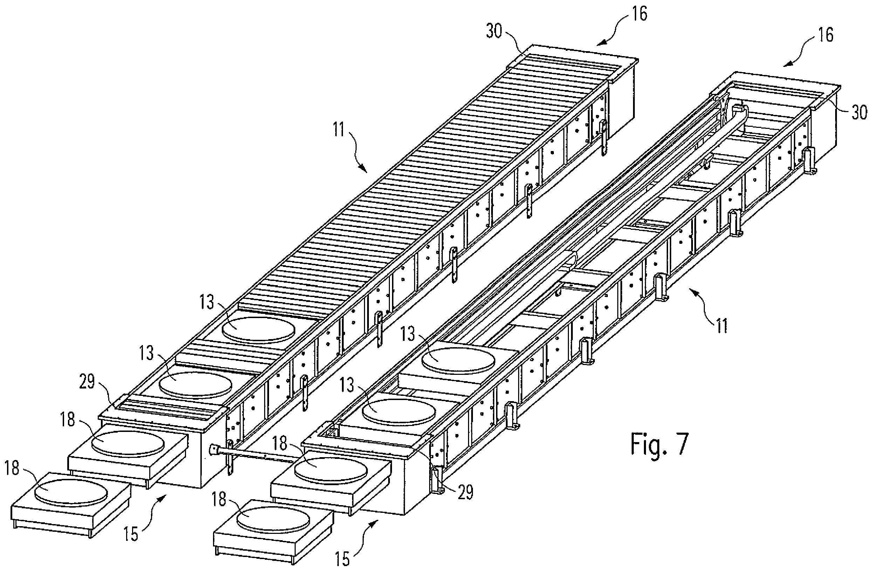

Fig. 7 zeigt eine alternative Ausführungsform der Vermessungseinrichtung. Die Vermessungseinrichtung gemäß Fig. 7 entspricht der Vermessungseinrichtung gemäß Fig. 1 mit folgenden Unterschieden. In beiden Aufnahmekassetten 10 und 11 sind je zwei erste Drehtellereinrichtungen 13 in Fahrzeuglängsrichtung X verfahrbar aufgenommen. Am fußseitigen Ende 15, außerhalb der Aufnahmekassetten 10, 11 sind je zwei ortsfest installierte zweite Drehtellereinrichtungen 18 hintereinander angeordnet. Zwischen den je zwei in einer Aufnahmekassette 10, 11 angeordneten ersten Drehtellereinrichtungen 13 sind einzelne Tragbalkenglieder zur Verbindung derselben (konkret drei) angeordnet. Im übrigen entspricht die Ausführungsform gemäß Fig. 7 der Ausführungsform gemäß Fig. 1. Die Ausführungsform gemäß Fig. 7 ist besonders flexibel, insbesondere können auch vierachsige Lastkraftwägen besonders einfach und schnell vermessen werden. An dieser Stelle sei darauf hingewiesen, dass sich üblicherweise bei vierachsigen Lastkraftwägen nur der Achsabstand zwischen zweiter und dritter Achse (von einer Fahrzeugfront aus gezählt) bei verschiedenen Modellen unterscheidet. Der Achsabstand zwischen erster und zweiter sowie dritter und vierter Achse ist normalerweise konstant. Aus diesem Grund ist auch der Abstand zwischen den je zwei hintereinander angeordneten ersten Drehtellereinrichtungen 13 bzw. zweiten Drehtellereinrichtungen 18 konstant. Alternativ ist es jedoch denkbar, insbesondere um die Flexibilität der Vermessungseinrichtung weiter zu erhöhen, auch den Abstand von den je zwei hintereinander angeordneten ersten Drehtellereinrichtungen 13 bzw. zweiten Drehtellereinrichtungen 18 veränderbar zu gestalten.

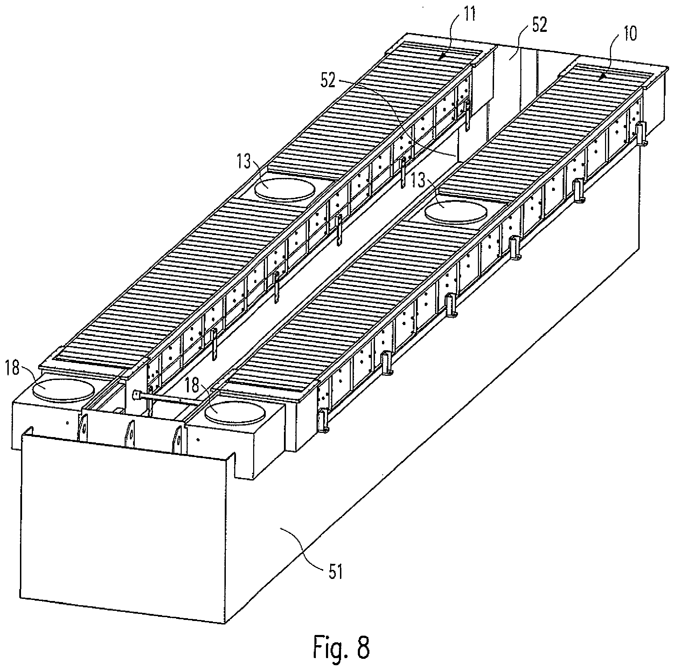

Fig. 8 zeigt eine Montagegrube in einer schematischen Schrägansicht. Die Montagegrube umfaßt einen kassettenartigen Grundkörper, der konkret als Stahlkassette 51 ausgebildet ist, wobei über dieser Stahlkassette 51 die Vermessungseinrichtung gemäß Fig. 1 angeordnet ist. In der schematischen Darstellung gemäß Fig. 8 sind Stahlkassette 51 und die Vermessungseinrichtung als getrennte Einheiten gezeichnet. Es ist jedoch alternativ auch denkbar, diese als eine bereits herstellerseitig vorgefertigte Einheit auszubilden, was den Montageaufwand der Montagegrube vor Ort erheblich reduziert. Durch eine Aussparung 52, die durch die Aufnahmekassetten 10, 11 berandet wird, können Montage- bzw. Reparaturarbeiten an einem sich auf der Vermessungseinrichtung befindlichen Fahrzeug durchgeführt werden. In diesem Zusammenhang ist auch eine Überwachung bezüglich Unregelmäßigkeiten bei der Vermessung des Fahrzeuges, beispielsweise inwiefern die Lenkung fest am Drehteller angebunden ist, möglich. In der Stahlkassette 51 können Meß- und/oder Auswerteinheiten (nicht in den Figuren gezeigt) untergebracht sein. Weiterhin können Versorgungsleitungen und weitere Installationen untergebracht sein. Die Stahlkassette 51 kann in Füllkammerbauweise konstruiert sein. Dazu können Seitenwände der Stahlkassette 51 eine Innenwandung und eine davon beabstandete Außenwandung aufweisen, so dass sich zwischen beiden Wandungen ein Hohlraum befindet. Gegebenenfalls ist die Außenwandung integraler Bestandteil der Kassette oder durch entfernbare Schalbretter od. dgl. gebildet. Nach einem Transport und Absenken der vorgefertigten Stahlkassette 51 in eine vorher ausgehobene Bodenausnehmung muß lediglich ein Füllmaterial in den Hohlraum zwischen den beiden beabstandeten Wandungen eingefüllt werden, um trotz Leichtbauweise der Kassette eine ausreichende Stabilität derselben bzw. der damit erstellten Montage- und Reparaturgrube zu erhalten. Die Außen- und Innenwandung dienen dabei unter anderem auch als Schalung. Neben dem vereinfachten Montageaufwand der Stahlkassette 51 ist diese auch in besonderer Weise fluiddicht gegenüber in die Stahlkassette 51 eintretenden Fluiden. Dies ist insbesondere auf die doppelwandige Ausgestaltung der Stahlkassette 51 zurückzuführen. Die Aufnahmekassetten 10, 11 können im Prinzip analog der Stahlkassette 51 ausgebildet sein.

An dieser Stelle sei darauf hingewiesen, dass alle oben beschriebenen Teile für sich alleine gesehen und in jeder Kombination, insbesondere die in den Zeichnungen dargestellten Details, als erfindungswesentlich beansprucht werden. Abänderungen hiervon sind dem Fachmann geläufig.

### Bezugszeichenliste

- X: Fahrzeuglängsrichtung
- Y: Fahrzeugquerrichtung
- 10: Aufnahmekassette
- 11: Aufnahmekassette
- 12: Tragbalkenband
- 13: (verfahrbare) erste Drehtellereinrichtung
- 14: Drehteller (der ersten Drehtellereinrichtung)
- 15: fußseitiges Ende
- 16: kopfseitiges Ende
- 17: Anti-Rutsch-Belag
- 18: (ortsfest installierte) zweite Drehtellereinrichtung
- 19: Drehteller (der zweiten Drehtellereinrichtung)
- 20: Antriebseinheit
- 21: Verbindungsstange
- 22: Seiteninnenwand
- 23: Kabelschleppkanal
- 24: Tragbalkenbandführungsschiene (obere)
- 25: Tragbalkenbandführungsschiene (untere)
- 26: Drehtellereinrichtungsführungsschiene
- 27: oberer Bereich
- 28: unterer Bereich
- 29: fußseitige Umlenkvorrichtung
- 30: kopfseitige Umlenkvorrichtung
- 31: erstes Ende des Tragbalkenbandes
- 32: zweites Ende des Tragbalkenbandes
- 33: Spannschloss
- 34: Umlenkabdeckung
- 35: Zahnrad
- 36: Aufnahmeteil
- 37: Tragbalken
- 38: rechteckförmige Ausnehmung
- 39: Innenseite (des Tragbalkenbandes)
- 40: Buchsenförderkette
- 41: Bolzen
- 42: Führungsrollen
- 43: Abschrägungen
- 44: Nut
- 45: Feder
- 46: Doppel-T-Träger
- 47: U-Profil
- 48: U-Profil (für Fahrgestell)
- 49: Führungsrolle
- 50: Fahrgestell
- 51: Stahlkassette
- 52: Aussparung

## Patentansprüche

1. Vermessungseinrichtung mit mindestens zwei ersten Drehtellereinrichtungen (13) für die Vermessung beispielsweise der Achse, der Spur, des Radsturzes und/oder des Nachlaufes eines Fahrzeuges, insbesondere eines Lastkraftwagens, wobei die mindestens zwei ersten Drehtellereinrichtungen (13) innerhalb der Vermessungseinrichtung in Fahrzeuglängsrichtung (X) verfahrbar sind, **dadurch gekennzeichnet, dass**
die Vermessungseinrichtung eine Antriebseinheit (20) aufweist, die zum Verfahren von mindestens zwei der ersten Drehtellereinrichtungen (13) in Fahrzeuglängsrichtung (X) ausgebildet ist, oder dass die Vermessungseinrichtung zwei Antriebseinheiten (20) aufweist, die jeweils einer ersten Drehtellereinrichtung (13) zugeordnet sind, und über ein Verbindungselement (21) verbunden sind, und dass mindestens zwei der ersten Drehtellereinrichtungen (13) miteinander verbunden sind derart, dass die entsprechenden Drehtellereinrichtungen so miteinander gekoppelt sind, dass ein Verfahren einer der ersten Drehtellereinrichtungen zu einem Verfahren einer weiteren ersten Drehtellereinrichtung führt.

2. Vermessungseinrichtung nach Anspruch 1,
**gekennzeichnet durch**
mindestens eine, insbesondere zwei zweite Drehtellereinrichtung/Drehteller-einrichtungen (18), die bezüglich der Fahrzeuglängsrichtung (X) ortsfest installiert sind.

3. Vermessungseinrichtung nach Anspruch 1 oder 2,
**dadurch gekennzeichnet, dass**
mindestens eine erste und/oder zweite Drehtellereinrichtung (13, 18) in Fahrzeugquerrichtung (Y) verfahrbar ist.

4. Vermessungseinrichtung nach einem der vorhergehenden Ansprüche, **dadurch gekennzeichnet, dass**
mindestens zwei der ersten und/oder zweiten Drehtellereinrichtungen (13, 18) bezüglich der Fahrzeuglängsrichtung (X) zueinander versetzt, insbesondere hintereinander angeordnet/anordenbar sind.

5. Vermessungseinrichtung nach einem der vorhergehenden Ansprüche, g**ekennzeichnet durch**
eine Antriebseinheit (20), die zum Verfahren von mindestens zwei der ersten Drehtellereinrichtungen (13) in Fahrzeugquerrichtung (Y) ausgebildet ist.

6. Vermessungseinrichtung nach einem der vorhergehenden Ansprüche, **gekennzeichnet durch**
mindestens eine Aufnahmekassette (10, 11), innerhalb der mindestens eine erste Drehtellereinrichtung (13) aufgenommen und verfahrbar ist.

7. Vermessungseinrichtung nach Anspruch 6,
**dadurch gekennzeichnet, dass**
die Vermessungseinrichtung mindestens ein Tragbalkenband (12) umfasst, durch welches die Aufnahmekassette (10, 11) oberseitig mindestens bereichsweise abdeckbar ist/abgedeckt ist.

8. Vermessungseinrichtung nach Anspruch 6 oder 7,
**dadurch gekennzeichnet, dass**
die Aufnahmekassette (10, 11) durch das Tragbalkenband (12) und mindestens eine erste Drehtellereinrichtung (13) vollständig abdeckbar ist/abgedeckt ist.

9. Vermessungseinrichtung nach einem der vorhergehenden Ansprüche, **dadurch gekennzeichnet, dass**
dieselbe Antriebseinheit zum Verfahren von mindestens einer ersten Drehtellereinrichtung (13) sowie des Tragbalkenbandes (12) vorgesehen ist.

10. Vermessungseinrichtung nach einem der vorhergehenden Ansprüche, **dadurch gekennzeichnet, dass**
ein erstes Ende (31) des Tragbalkenbandes (12) mit einem ersten Ende von mindestens einer ersten Drehtellereinrichtung (13) verbindbar/verbunden ist, wobei das Tragbalkenband (12) über Umlenkvorrichtungen (29, 30) derart umgelenkt ist, dass ein zweites Ende (32) des Tragbalkenbandes (12) mit einem zweiten Ende der mindestens einen ersten Drehtellereinrichtung (13) verbindbar/verbunden ist, so dass ein lediglich durch die erste Drehtellereinrichtung und ggf. durch mindestens ein Verbindungselement, wie beispielsweise durch eine Spannvorrichtung, unterbrochenes, ansonsten umlaufendes Tragbalkenband (12) ausgebildet/ausbildbar ist.

11. Vermessungseinrichtung nach einem der vorhergehenden Ansprüche, **dadurch gekennzeichnet, dass**
ein maximaler Fahrweg von mindestens einer ersten Drehtellereinrichtung (13) mindestens 4 m, insbesondere 7 m, vorzugsweise 9 m und besonders vorzugsweise 11 m beträgt.

12. Vermessungseinrichtung nach einem der vorhergehenden Ansprüche, **dadurch gekennzeichnet, dass**
das Tragbalkenband (12) befahrbar ist.

13. Vermessungseinrichtung nach Anspruch 12,
**dadurch gekennzeichnet, dass**
ein Fahrgestell (50) von mindestens einer ersten Drehtellereinrichtung (13) und/oder das Tragbalkenband (12) auf/in vorzugsweise separaten Führungseinrichtungen insbesondere verfahrbar gelagert/aufgenommen sind.

14. Vermessungseinrichtung nach einem der vorhergehenden Ansprüche,
**dadurch gekennzeichnet, dass**
innerhalb der Aufnahmekassette (10, 11) ein Kabelschleppkanal (23) insbesondere für Druckluft- und/oder Elektrozuführungen ausgebildet ist.

15. Vermessungseinrichtung nach einem der vorhergehenden Ansprüche,
**dadurch gekennzeichnet, dass**
die Vermessungseinrichtung ein Lesegerät umfasst, über das Fahrzeugkenndaten auslesbar sind.

16. Montagegrube, umfassend eine Vermessungseinrichtung nach einem der vorhergehenden Ansprüche, wobei die Vermessungseinrichtung vorzugsweise an einem Rand der Montagegrube angeordnet ist.

17. Montagegrube nach Anspruch 16,
**dadurch gekennzeichnet, dass**
die Montagegrube oberseitig mindestens bereichsweise, insbesondere vollständig von dem Tragbalkenband (12) und/oder mindestens einer ersten Drehtellereinrichtung (13) und/oder mindestens einer zweiten Drehtellereinrichtung (18) abdeckbar/abgedeckt ist.

18. Verfahren zum Vermessen eines Fahrzeugs, insbesondere Lastkraftwagens,
**gekennzeichnet durch** die Schritte:
a) Auslesen von Fahrzeugkenndaten, insbesondere Auslesen des Radstandes und/oder der Spurweite;
b) Synchrones Verfahren von mindestens zwei Drehtellereinrichtungen (13) einer Vermessungseinrichtung insbesondere nach einem der Ansprüche 1-15, **durch** einen gemeinsamen Antrieb in Fahrzeuglängsrichtung, entsprechend den ausgelesenen Fahrzeugkenndaten;
c) Positionieren von mindestens zwei Rädern des zu vermessenden Fahrzeuges auf den entsprechenden Drehtellereinrichtungen (13); und
d) Durchführen von Messungen, insbesondere Vermessung der Achse, der Spur, des Radsturzes und/oder des Nachlaufs des zu vermessenden Fahrzeugs.

## Claims

1. A measuring device having at least two first rotary table means (13) for measuring, for example, the axle, the track, the wheel camber and/or the caster of a vehicle such as a lorry, the at least two first rotary table means (13) being displaceable inside the measuring device in the longitudinal direction (X) of the vehicle,
**characterized in that**
the measuring device comprises a drive unit (20) configured to displace at least two of the first rotary table means (13) in the longitudinal direction (X) of the vehicle, or the measuring device comprises two drive units (20) each assigned to a first rotary table means (13) and connected through a connecting element (21), and that
at least two of the first rotary table means (13) are connected to one another in such a manner that the respective rotary table means are coupled to one another such that a displacement of one of the first rotary table means results in a displacement of a further first rotary table means.

2. The measuring device according to claim 1,
**characterized by**
at least one, in particular two second rotary table means (18) which are installed to be stationary with respect to the longitudinal direction (X) of the vehicle.

3. The measuring device according to claim 1 or 2,
**characterized in that**
at least one first and/or second rotary table means (13, 18) is displaceable in the transverse direction (Y) of the vehicle.

4. The measuring device according to any one of the preceding claims, **characterized in that**
at least two of the first and/or second rotary table means (13, 18) are arranged/arrangeable to be mutually offset, for example, one behind the other with respect to the longitudinal direction (X) of the vehicle.

5. The measuring device according to any one of the preceding claims, **characterized by**
a drive unit (20) configured to displace at least two of the first rotary table means (13) in the transverse direction (Y) of the vehicle.

6. The measuring device according to any one of the preceding claims, **characterized by**
at least one receiving cassette (10, 11) in which the at least one first rotary table means (13) is received and displaceable.

7. The measuring device according to claim 6,
**characterized in that**
the measuring device comprises at least one girder belt (12) by means of which the upper side of the receiving cassette (10, 11) can be covered/is covered at least in sections.

8. The measuring device according to claim 6 or 7,
**characterized in that**
the receiving cassette (10, 11) can be covered/is covered completely by the girder belt (12) and at least one first rotary table means (13).

9. The measuring device according to any one of the preceding claims, **characterized in that**
the same drive unit is designed for displacing at least one first rotary table means (13) and the girder belt (12).

10. The measuring device according to any one of the preceding claims, **characterized in that**
a first end (31) of the girder belt (12) can be connected/is connected to a first end of at least one first rotary table means (13), the girder belt (12) being deflected by deflecting means (29, 30) in such a manner that a second end (32) of the girder belt (12) can be connected/is connected to a second end of the at least one first rotary table means (13) so that a girder belt (12) is formed/can be formed which is merely interrupted by the first rotary table means and possibly by at least one connecting element such as a clamping device, for example, and is otherwise circumferential.

11. The measuring device according to any one of the preceding claims, **characterized in that**
a maximum travel of at least one first rotary table means (13) is at least 4m. such as 7 m, preferentially 9 m, and particularly preferred 11 m.

12. The measuring device according to any one of the preceding claims, **characterized in that**
the girder belt (12) is passable by vehicles.

13. The measuring device according to claim 12,
**characterized in that**
a traveling mechanism (50) of at least one first rotary table means (13) and/or the girder belt (12) are supported/received to be displaceable, for example, on preferably separate guiding means.

14. The measuring device according to any one of the preceding claims, **characterized in that**
a cable drag duct (23), for example, for pressurized air and/or electrical supply lines is formed in the receiving cassette (10, 11).

15. The measuring device according to any one of the preceding claims, **characterized in that**
the measuring device comprises a reading device by means of which characteristic vehicle data can be read.

16. An assembly pit, comprising a measuring device according to any one of the preceding claims, the measuring device being preferentially disposed at an edge of the assembly pit.

17. The assembly pit according to claim 16,
**characterized in that**
the upper side of the assembly pit can be covered/is covered at least in sections, in particular completely, by the girder belt (12) and/or at least one first rotary table means (13) and or at least one second rotary table means (18).

18. A method for measuring a vehicle such as a lorry,
**characterized by** the steps of:
a) reading characteristic vehicle data, in particular reading the wheelbase and/or wheel track;
b) synchronously displacing at least two rotary table means (13) of a measuring device, in particular according to any one of claims 1 - 15, by a common drive unit in the longitudinal direction of the vehicle in accordance with the read characteristic vehicle data;
c) positioning at least two wheels of the vehicle to be measured on the corresponding rotary table means (13); and
d) performing measurements, for example, measuring the axle, the track, the wheel camber and/or the caster of the vehicle to be measured.

## Revendications

1. Dispositif de mesure comprenant au moins deux premiers dispositifs à plateau tournant (13) pour la mesure par exemple de l'axe, du parallélisme, du carrossage et/ou de la chasse d'un véhicule, en particulier d'un camion, sachant que les au moins deux premiers dispositifs à plateau tournant (13) sont déplaçables à l'intérieur du dispositif de mesure en direction longitudinale de véhicule (X),
**caractérisé en ce que**
le dispositif de mesure présente une unité d'entraînement (20) qui est constituée pour le déplacement d'au moins deux des premiers dispositifs à plateau tournant (13) en direction longitudinale de véhicule (X), ou **en ce que** le dispositif de mesure présente deux unités d'entraînement (20) qui sont respectivement associées à un premier dispositif à plateau tournant (13), et sont reliées via un élément de liaison (21), et **en ce que**
au moins deux des premiers dispositifs à plateau tournant (13) sont reliés entre eux de telle façon que les dispositifs à plateau tournant correspondants soient couplés les uns aux autres de telle sorte qu'un déplacement d'un des premiers dispositifs à plateau tournant entraîne un déplacement d'un autre premier dispositif à plateau tournant.

2. Dispositif de mesure selon la revendication 1,
**caractérisé par**
au moins un, en particulier deux deuxième/s dispositif/s à plateau tournant (18), qui est/sont installé/s de manière stationnaire par rapport à la direction longitudinale de véhicule (X).

3. Dispositif de mesure selon la revendication 1 ou 2,
**caractérisé en ce que**
au moins un premier et/ou deuxième dispositif à plateau tournant (13, 18) est déplaçable en direction transversale de véhicule (Y).

4. Dispositif de mesure selon l'une des revendications précédentes,
**caractérisé en ce que**
au moins deux des premiers et/ou deuxièmes dispositifs à plateau tournant (13, 18) sont décalés les uns par rapport aux autres par rapport à la direction longitudinale de véhicule (X), en particulier sont disposés/aptes à être disposés les uns derrière les autres.

5. Dispositif de mesure selon l'une des revendications précédentes,
**caractérisé par**
une unité d'entraînement (20) qui est constituée pour le déplacement d'au moins deux des premiers dispositifs à plateau tournant (13) en direction transversale de véhicule (Y).

6. Dispositif de mesure selon l'une des revendications précédentes,
**caractérisé par**
au moins une cassette de réception (10, 11) dans laquelle au moins un premier dispositif à plateau tournant (13) est réceptionnée et déplaçable.

7. Dispositif de mesure selon la revendication 6,
**caractérisé en ce que**
le dispositif de mesure comprend au moins une bande à poutre porteuse (12) par laquelle la cassette de réception (10, 11) est apte à être recouverte/est recouverte en face supérieure au moins en partie.

8. Dispositif de mesure selon la revendication 6 ou 7,
**caractérisé en ce que**
la cassette de réception (10, 11) est apte à être recouverte/est recouverte intégralement par la bande à poutre porteuse (12) et au moins un premier dispositif à plateau tournant (13).

9. Dispositif de mesure selon l'une des revendications précédentes,
**caractérisé en ce que**
la même unité d'entraînement est prévue pour le déplacement d'au moins un premier dispositif à plateau tournant (13) ainsi que de la bande à poutre porteuse (12).

10. Dispositif de mesure selon l'une des revendications précédentes,
**caractérisé en ce que**
une première extrémité (31) de la bande à poutre porteuse (12) est apte à être reliée/est reliée à une première extrémité d'au moins un premier dispositif à plateau tournant (13), sachant que la bande à poutre porteuse (12) est renvoyée via des dispositifs de renvoi (29, 30) de telle façon qu'une deuxième extrémité (32) de la bande à poutre porteuse (12) soit apte à être reliée/soit reliée à une deuxième extrémité de l'au moins un premier dispositif à plateau tournant (13), de sorte qu'une bande à poutre porteuse (12) seulement interrompue par le premier dispositif à plateau tournant et le cas échéant par au moins un élément de liaison, comme par exemple un dispositif tendeur, et sinon périphérique, est constituée/est apte à être constituée.

11. Dispositif de mesure selon l'une des revendications précédentes,
**caractérisé en ce que**
une course de déplacement maximale d'au moins un premier dispositif à plateau tournant (13) est d'au moins 4 m, en particulier de 7 m, de préférence de 9 m et de façon particulièrement préférentielle de 11 m.

12. Dispositif de mesure selon l'une des revendications précédentes,
**caractérisé en ce que**
la bande à poutre porteuse (12) est carrossable.

13. Dispositif de mesure selon la revendication 12,
**caractérisé en ce que**
un châssis (50) d'au moins un premier dispositif à plateau tournant (13) et/ou la bande à poutre porteuse (12) sont logés/réceptionnés sur/dans des dispositifs de guidage de préférence distincts, en particulier de manière déplaçable.

14. Dispositif de mesure selon l'une des revendications précédentes, **caractérisé en ce que**
un canal porte-câbles (23), en particulier pour des alimentations en air comprimé et/ou électriques, est constitué à l'intérieur de la cassette de réception (10, 11).

15. Dispositif de mesure selon l'une des revendications précédentes, **caractérisé en ce que**
le dispositif de mesure comprend un appareil de lecture via lequel des caractéristiques de véhicule peuvent être relevées.

16. Fosse de montage, comprenant un dispositif de mesure selon l'une des revendications précédentes, sachant que le dispositif de mesure est disposé de préférence à un bord de la fosse de montage.

17. Fosse de montage selon la revendication 16,
**caractérisée en ce que**
la fosse de montage est apte à être recouverte/est recouverte en face supérieure au moins en partie, en particulier intégralement, par la bande à poutre porteuse (12) et/ou au moins un premier dispositif à plateau tournant (13) et/ou au moins un deuxième dispositif à plateau tournant (18).

18. Procédé pour la mesure d'un véhicule, en particulier d'un camion, **caractérisé par** les étapes de :
a) relevé de caractéristiques de véhicule, en particulier relevé de l'empattement et/ou de l'écartement des roues ;
b) déplacement synchrone d'au moins deux dispositifs à plateau tournant (13) d'un dispositif de mesure en particulier selon l'une des revendications 1 à 15, par un entraînement commun en direction longitudinale de véhicule, conformément aux caractéristiques de véhicule relevées ;
c) positionnement d'au moins deux roues du véhicule à mesurer sur les dispositifs à plateau tournant (13) correspondants ; et
d) exécution de mesures, en particulier mesure de l'axe, du parallélisme, du carrossage et/ou de la chasse d'un véhicule à mesurer.
